(19) Europäisches Patentamt
European Patent Office
Office européen des brevets

(11) Veröffentlichungsnummer: **0 209 020 B1**

(12) # EUROPÄISCHE PATENTSCHRIFT

(45) Veröffentlichungstag der Patentschrift: **04.03.92**

(51) Int. Cl.[5]: **C08G 8/10**, C08G 8/28, C08G 8/36, C08G 85/00, C09D 161/14, C09D 5/44, C08L 61/14

(21) Anmeldenummer: **86109179.1**

(22) Anmeldetag: **04.07.86**

Die Akte enthält technische Angaben, die nach dem Eingang der Anmeldung eingereicht wurden und die nicht in dieser Patentschrift enthalten sind.

(54) **Verfahren zur Herstellung von Phenolharzen.**

(30) Priorität: **13.07.85 DE 3525072**

(43) Veröffentlichungstag der Anmeldung:
**21.01.87 Patentblatt 87/04**

(45) Bekanntmachung des Hinweises auf die Patenterteilung:
**04.03.92 Patentblatt 92/10**

(84) Benannte Vertragsstaaten:
**AT BE CH DE FR GB IT LI NL SE**

(56) Entgegenhaltungen:
**EP-A- 0 165 557**
**EP-A- 0 165 648**
**US-A- 4 120 847**

**CHEMICAL ABSTRACTS, Band 94, Nr. 12, 23. März 1981, Seite 43, Spalte 2, Zusammenfassungsnr. 85088y, Columbus, Ohio, US; & JP - A - 80 135 121 (JAPAN KOKAI TOKKYO KOHO) 21.10.1980**

(73) Patentinhaber: **BASF Aktiengesellschaft**
**Carl-Bosch-Strasse 38**
**W-6700 Ludwigshafen(DE)**

(72) Erfinder: **Kempter, Fritz Erdmann, Dr.**
**L 2,14**
**W-6800 Mannheim 1(DE)**
Erfinder: **Nieberle, Juergen, Dr.**
**Am Huettenwingert 19**
**W-6706 Wachenheim(DE)**

EP 0 209 020 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von im wesentlichen phenolfreien, über o,o-Methylenethergruppen verknüpfte Phenolharzen, durch Methylolierung von Phenol und/oder m-alkylsubstituierten Phenolen, gegebenenfalls im Gemisch mit anderen Alkylphenolen, in wäßrigem Medium in Gegenwart von 0,5 bis 10 Gew.-%, bezogen auf eingesetzte Phenole, zweiwertiger Metallkationen, anschließendes Abtrennen der Kationen in Form schwerlöslicher Salze, gegebenenfalls Reaktion mit ein-, zwei- oder dreiwertigen Alkoholen und/oder methylolierte Amidgruppen aufweisenden Verbindungen, destillatives Entfernen des Wassers, gegebenenfalls mit Hilfe eines Schleppmittels, und Entfernung restlichen Phenols durch Dünnschichtverdampfung.

In der US-PS 3 485 797 wird ein Verfahren zur Herstellung orthoreicher Resole beschrieben, welches in nicht-wäßrigen Lösungsmitteln wie z.B. Benzol usw. durchgeführt wird.

Orthoreiche Resole, deren Methylolgruppen mit Alkoholen partiell verethert worden sind, werden in den US-PS 4 120 847, 4 157 324 und 4 122 054 sowie in der DE-OS 34 22 510 beschrieben.

Die Methylolierung von Phenol zur Herstellung orthoreicher, d.h. im wesentlichen über o,o'-Methylenether verknüpfter Phenolresole kann üblicherweise in wäßrigem Medium durchgeführt werden. Die Direktion der Methylolgruppen in die o-Position erfolgt durch die Verwendung vorzugsweise zweiwertiger Metallionen als Katalysatoren. Der günstigste pH-Bereich für diese Reaktion liegt bei 4,5 bis 5,5. In leicht alkalischer Lösung können $Ca^{++}$- und $Mg^{++}$-Ionen als Katalysatoren eingesetzt werden.

Außerdem ist für den Grad der Reaktion in o-Position - und die mengenmäßige Ausbeute - die Katalysatormenge mitbestimmend, so daß höhere Metallsalzmengen eingesetzt werden müssen. Diese höheren Mengen an Metallsalzen führen bei der Verfahrensdurchführung zu Schwierigkeiten und beeinträchtigen die Qualität der Verfahrensprodukte.

Ein Nachteil der bisher bekannten orthoreichen Resolether ist ihr Gehalt an nicht umgesetzten freiem Phenol, der im allgemeinen bei 5 bis 12 Gew.%, bezogen auf den Festharzanteil, liegt.

Die Entfernung von nicht umgesetztem Phenol kann im Dünnschichtverdampfer bevorzugt bei 80 - 120 °C bei 0,5 - 15 mbar (vgl. EP-A 165 557) erfolgen. Die Produktzusammensetzung und die Produktviskosität werden wesentlich bestimmt durch die Temperatur und die Verweilzeit des Produktes während des letzten Verfahrensschritts, der Dünnschichtverdampfung. Darüber hinaus können je nach Art der Modifizierung der Harze die Viskositätsänderungen besonders bei kontinuierlicher Verfahrensdurchführung derartig schwerwiegend werden, daß der an sich technisch vorteilhafte Verfahrensschritt zur Entfernung von Phenol im Dünnschichtverdampfer zu Schwierigkeiten, wie Anbakkungen durch Vernetzung bis zum Unbrauchbarwerden der Anlage führt. Speziell bei unmodifizierten Verfahrensprodukten kann die technische Durchführbarkeit des Verfahrens unmöglich und im Falle modifizierter Produkte zumindest deutlich erschwert werden.

Aufgabe der vorliegenden Erfindung war es, ein betriebssicheres Verfahren zur Herstellung orthoreicher Phenolharze und modifizierter Phenolharze bereitzustellen, welches die Entfernung nicht umgesetzten Phenols im Dünnschichtverdampfer auf Restgehalte von <0.5 % ohne Auftreten der oben beschriebenen Schwierigkeiten ermöglicht.

Demgemäß wurde ein Verfahren zur Herstellung von im wesentlichen phenolfreien, über o,o-Methylenethergruppen verknüpften Phenolharzen durch Methylolierung von Phenol und/oder m-alkylsubstituierten Phenolen, gegebenenfalls im Gemisch mit anderen Alkylphenolen, in wäßrigem Medium in Gegenwart von 0,5 bis 10 Gew.-%, bezogen auf eingesetzte Phenole, zweiwertiger Metallkationen, anschließendes Abtrennen der Kationen in Form schwerlöslicher Salze, gegebenenfalls Reaktion mit ein-, zwei- oder drei wertigen Alkoholen und/oder methylolierte Amidgruppen aufweisenden Verbindungen, destillatives Entfernen des Wassers, gegebenenfalls mit Hilfe eines Schleppmittels, und Entfernung restlichen Phenols durch Dünnschichtverdampfung, welches dadurch gekennzeichnet ist, daß man die Dünnschichtverdampfung in Gegenwart einer säurebindenden Verbindung B vornimmt, die einen $pK_a$-Wert von 4 - 11,5 hat, gefunden.

Als säurebindende Verbindung B wird vorzugsweise ein Amin verwendet.

Bevorzugt sind sekundäre Amine mit $C_1$- bis $C_{12}$-Alkylgruppen wie z.B. Di-n-butylamin. Als Verbindungen B' eignen sich beispielsweise asymmetrische Dialkylharnstoffe.

Zur Herstellung der erfindungsgemäßen orthoreichen Resolether nach dem erfindungsgemäßen Verfahren werden Phenol, gegebenenfalls im Gemisch mit Alkylphenolen (o- oder p-substituiert) oder Kohlenwasserstoffharze, die Phenolgruppierungen eingebaut enthalten, oder Polybutadienoelmodifizierte Phenolkörper z.B. nach der EP 2 517 sowie m-substituierte Alkylphenole zusammen mit Formaldehyd oder Formaldehyd liefernden Verbindungen im wäßrigen System in Anwesenheit von die Reaktion in die o-Position dirigierenden Katalysatoren, z.B. Salzen flüchtiger organischer Carbonsäuren mit 2-wertigen Metallkationen wie $Zn^{++}$, $Sn^{++}$, $Mg^{++}$, $Ca^{++}$, $Pb^{++}$, $Ba^{++}$, $Co^{++}$ in einer Menge von 0,5 - 10 %, bevorzugt 1,3 - 5 %, bezogen auf eingesetztes Phenol, bevorzugt in

Form ihrer Formiate, Acetate und auch Propionate, bei pH 4 - 7, bevorzugt pH 4,54 - 6,0, bei 80 - 100 °C zur Reaktion gebracht, bis der Formaldehyd überwiegend abreagiert hat.

Die Molverhältnisse Phenol zu Formaldehyd liegen bei 1:1,0 bis 1:2,5 mol, bevorzugt 1:1,5 bis 1:2,2 mol.

Der Kondensationsgrad der Produkte gegen Ende dieser Verfahrensstufe beträgt im Mittelwert 1 - 4 Phenoleinheiten im Molekül. Bei höheren Kondensationsgraden liegt meistens eine nicht homogene wäßrige Einstellung vor, die durch Zugabe von z.B. Methanol oder anderen wasserlöslichen Alkoholen oder Ketonen homogenisiert werden kann.

Zum Zweck der Abtrennung des Katalysators wird dieser in wasserunlösliche Salze, z.B. Phosphate (Hydrogen- oder Ammonium-Phosphate) oder Sulfate oder Carbonate überführt. Als Auswahlkriterium gilt die problemlose Abtrennung der weitgehend unlöslichen Salze z.B. durch Filtration. Bevorzugt werden die für die Durchführung des Verfahrens besonders geeigneten Zinksalze als Hydrogenphosphate entfernt. Günstig wirkt sich zu diesem Zeitpunkt bereits die Anwesenheit der später zur Veretherung einzusetzenden Alkohole aus oder anderer die Homogenisierung des Ansatzes herbeiführender Zusätze, die auch vor der Veretherung wieder entfernt werden können, wie z.B. Methanol.

Zur Bildung der Phosphate wird wäßrige Phosphorsäure bei 20 - 70 °C, bevorzugt 25 - 40 °C, innerhalb etwa einer Stunde zudosiert. Uberschüsse an nicht umgesetzter Phosphorsäure sind zu vermeiden, da diese zu übermäßigem Molekulargewichtsanstieg oder Vernetzung des Ansatzes führen können.

Anschließend erfolgt zweckmäßigerweise die Abtrennung des Wassers und zwar zweckmäßigerweise mit Hilfe eines Schleppmittels wie Toluol oder Cyclohexan unter vermindertem Druck bei 35 - 50 °C gegebenenfalls unter langsamem Anstieg der Temperatur auf 60 - 80 °C.

Eine bevorzugte Arbeitsweise ist es, schon diesen Schritt im Dünnschichtverdampfer durchzuführen. So erhält man beispielsweise durch Destillation im Dünnschichtverdampfer bei 50 °C Wandtemperatur und einem Druck von 15 mbar konzentrierte Lösungen mit einem Feststoffgehalt von 60 - 85 %, die direkt nach Zugabe der säurebindenden Verbindung dem letzten Schritt des erfindungsgemäßen Verfahrens im Dünnschichtverdampfer unterworfen werden können.

Während der Abtrennung des Wassers ist es zweckmäßig, die Anwesenheit der Verbindungen B bzw. B' zu vermeiden.

Die orthoreichen Phenolharze können auch modifiziert sein. Es ist z.B. eine Modifizierung durch partielle Veretherung mit Alkoholen möglich.

Zur Veretherung kommen im einzelnen Mono- und Polyalkohole in Betracht, bevorzugt hochsiedende, die in diesem Reaktionsschritt nicht oder nur geringfügig aus dem Reaktor destillieren, also z.B. Ethylenglykolmonobutylether, Ethylenglykolmonohexylether, Phenylglykol, Diethylglykolmonobutylether, Benzylalkohol, Ethylenglykol, Hexandiol-1,6, Pentandiol-1,5, Butandiol-1,4, Mono-, Di-, Tri- und Tetra-ethylenglykol, Decandiol-1,10, Dipropylenglykol, Thiodiglykol oder Gemische dieser Alkohole. Besonders bevorzugt sind Dialkohole mit primären OH-Gruppen, wie Hexandiol-1,6, Butandiol-1,4, Pentandiol-1,5 sowie Mono-, Di- und Tri-ethylenglykol.

Die Veretherung mit den hochsiedenden Alkoholen wird zweckmäßigerweise so geführt, daß ein möglichst vollständiger Einbau in das Phenolharz erreicht wird. Im Falle von Dialkoholen können beide OH-Gruppen des Alkohols umgesetzt werden. Im allgemeinen liegen dann jedoch Produkte vor, deren Alkoholkomponente halbseitig und nur untergeordnet mit Methylolgruppen verethert ist.

Derartige Produkte sind z.B. in der älteren EP 165 557 beschrieben. Eine andere Art der Modifizierung kann durch Einbau von Amidgruppen aufweisenden Verbindungen der Formel (I) erfolgen.

(I) $H_2N - CO - R$

R = Alkylrest mit 1 bis 18 C-Atomen.

Ihr Einbau erfolgt bevorzugt über eine Methylolierung durch im Überschuß vorhandenen Formaldehyd unter den Bedingungen des erfindungsgemäßen Verfahrens.

Als Amidgruppen aufweisende Verbindungen kommen Amide von Mono- und Dicarbonsäuren in Frage sowie Mono- und Bis-Carbamate der Formel (II)

(II) $H_2N - CO - O - R$ ,

R = Alkylrest mit 1 bis 18 C-Atomen,
die sich aus Mono- und Di-Alkoholen ableiten und in einfacher Weise aus diesen durch Umsetzung mit Harnstoff z.B. nach der US-PS 4 156 734 hergestellt werden können.

Außerdem kommen Monoalkylharnstoffe mit geradkettigen oder verzweigten Alkylresten mit einer Kettenlänge von 1 - 14 C-Atomen, z.B. Ethylhexylharnstoff, sowie asymmetrische Dialkylharnstoffe der Formel (III)

(III) 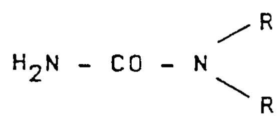

R = Alkylrest mit 1 bis 9 C-Atomen, wie Di-n-butylharnstoff in Betracht.

Vor der Abtrennung des überschüssigen Phenols erfolgt zweckmäßigerweise die Entfernung der überwiegenden Menge des Wassers unter schonenden Bedingungen. Im allgemeinen werden Destillationstemperaturen von 30 - 60 °C bei entsprechend niedrigen Drücken und gegebenenfalls unter Zusatz eines Schleppmittels wie Toluol gewählt. Sehr vorteilhaft läßt sich dieser Verfahrensschritt schon an dieser Stelle im Dünnschichtverdampfer durchführen, besonders dann, wenn erwünschte Begleitreaktionen wie der Einbau von Dialkylharnstoff unter den gewählten Bedingungen nicht behindert wird, so daß sich die Aufarbeitung der Harzlösung als zweistufiges Destillationsverfahren im Dünnschichtverdampfer gestalten läßt.

Zur Durchführung der Dünnschichtverdampfung werden die auf einen Feststoffgehalt von 50 - 85 % aufkonzentrierten Harzlösungen aus der vorhergehenden Verfahrensstufe mit einer säurebindenden Verbindung B, die gegebenenfalls unter den gewählten Verfahrensbedingungen aus einer Verbindung B' freigesetzt wird, versetzt und durch Destillation im Dünnschichtverdampfer in die Verfahrensprodukte überführt.

Die wirksamen Mengen der Verbindungen B liegen bei 0,1 - 5,0 %, bevorzugt 0,5 - 3,0 %, bezogen auf den Harzfeststoff.

Die einzusetzenden Mengen an thermisch spaltbaren Verbindungen B, wie z.B. den Dialkylharnstoffen, bevorzugt Dibutylharnstoff, liegen vorzugsweise zwischen 1,0 und 40 %, bezogen auf das Phenolharz. Dabei wird unter den gewählten Verfahrensbedingungen angestrebt, daß überwiegend Einbau der Harnstoffgruppierung in das Phenolharz stattfindet und nur ein kleiner Teil des Amins im Rahmen der oben genannten Grenzwerte abgespalten wird.

Als Dünnschichtverdampfer eignen sich die üblichen Apparate in Frage, wie Fallfilmverdampfer (Röhrenverdampfer) und Verdampfer, bei denen Schichten durch mechanische Vorrichtungen, wie z.B. Rührer mit Wischern erzeugt werden (sog. Sambay$^{(R)}$- (Bayer AG) oder Luwa$^{(R)}$-Verdampfer) (Luwa AG, Schweiz).

Die Verdampfereinheiten können auch in Reihe hintereinander angeordnet sein, wobei dann die säurebindende Verbindung B bzw. B spätestens vor dem letzten Verfahrensschritt zugesetzt wird.

Die Temperaturen während der Dünnschichtverdampfung können gewählt werden von 80 - 130 °C, bevorzugt 100 - 120 °C bei Drucken von 0,5 - 50 mbar, bevorzugt 1,0 - 20 mbar.

In Abhängigkeit von Temperatur und Verweilzeit im Dünnschichtverdampfer stellt sich das endgültige Molekulargewicht des Verfahrensproduktes ein. Durch die beschriebene Verfahrensweise ist es z.B. möglich, vorhandene Methylolgruppierungen im Sinne einer Veretherung mit sich selbst oder, sofern vorhanden, mit anderen Hydroxymethylverbindungen zur Reaktion zu bringen.

Die letzte Verfahrensstufe erlaubt die Reduzierung bzw. Entfernung der Restphenolmengen, die in der vorhergehenden Verfahrensstufe im allgemeinen bei Werten von 4 - 12 %, überwiegend bei 5 - 7 %, bezogen auf Festharz liegen, auf < 1 %. Gegebenenfalls werden auch nicht eingebaute Alkohole durch Behandlung des in der vorhergehenden Verfahrensstufe erhaltenen Produktes im Dünnschichtverdampfer bei 80 - 150 °C und unter vermindertem Druck abgetrennt. Gelegentlich werden dabei auch geringe Mengen an o-Monomethylolphenol (Saligenin) abgetrennt.

Für einige Anwendungen, besonders auf dem Beschichtungssektor, ist es vorteilhaft, Produkte mit besonders niedrigen Restphenolgehalten einzusetzen; in diesen Fällen lassen sich Produkte mit Phenolgehalten von 0,05 - 0,5 %, bezogen auf das Festharz, ohne weiteres herstellen.

Der Kondensationsgrad steigt bei der Dünnschichtverdampfung im allgemeinen nochmals an. Temperatur und Verweilzeit werden so gewählt, daß die Verfahrensprodukte das gewünschte mittlere Molekulargewicht aufweisen. Molekulargewichte von im Mittel 180 - 2000, bevorzugt 200 - 500, ermöglichen im allgemeinen die Durchführung des Verfahrens und die Verwendung der erfindungsgemäßen Verfahrensprodukte für den vorgesehenen Einsatzzweck.

Der Einsatz der Verfahrensprodukte kann als eigenständiges Bindemittel erfolgen, aber auch in der Kombination mit anderen, zur Co-Vernetzung geeigneten Stoffen. Von diesen seien Bindemittel mit basischen N-Atomen im Molekül, vor allem solche, die NH-Gruppen aufweisen besonders genannt, da diese sich zur Verwendung als kathodiche Elektrotauchlackbindemittel eignen, wie sie z.B. in den älteren EP 165 556 und EP 165 648 beschrieben sind, wobei die Verfahrensprodukte auf 120 - 140 °C erniedrigte Einbrenntemperaturen möglich machen. Insbesonders Verfahrensprodukte mit einem hohen Methylolierungsgrad weisen außerdem das vergilbungsarme Aushärten der Beschichtungen auf.

<u>Beispiel 1</u>

a) 1075 g Phenol (11,44 mol) und 1886 g einer wäßrigen 40 %igen Formaldehydlösung (25,15 mol) wurden mit 99,0 g Zinkacetat [Zn-$(CH_3COO)_2 2H_2O$] 3,5 Stunden auf 90 °C erhitzt. Zur auf ca. 30 °C gekühlten Lösung wurden 100 g Methanol zugefügt, und innerhalb einer Stunde wurden 97,5 g einer 40 gew.%igen wäßrigen o-$H_3PO_4$-Lösung zugetropft, wonach filtriert wurde.

Nach Zusatz von 300 g Toluol wurde Wasser bei 35 °C und einem Druck von 80 - 90 mbar ausgekreist, bis die Harzlösung einen Feststoffgehalt von 51 % erreicht hatte.

In 700 g dieser nochmals filtrierten Lösung wurden 7,2 g Di-n-butylamin eingerührt. Diese Lösung wurde anschließend bei 110 °C und einem Druck von 1 mbar über einen Dünnschichtverdampfer aufkonzentriert.

Die erhaltenen 314 g des schwach gelb gefärbten Harzes hatten einen Feststoffgehalt von 99,4 Gew.%, eine Viskosität von 1920 mPas/75 °C (gemessen auf einem JCJ-Platte-Kegel-Viskosimeter) und ein mittleres Molekulargewicht von 280.

Der Gehalt an freiem Phenol betrug 0,23 Gew.%; der Gehalt an Zink 18 ppm.

b) In 800 g der unter a) erhaltenen 51 gew.%igen Harzlösung wurden 24,0 g asymmetrischer Di-n-butylharnstoff eingerührt. Die Lösung wurde vor der Weiterverarbeitung 2,5 Stunden bei 40 °C aufbewahrt und dann wie oben beschrieben im Dünnschichtverdampfer aufgearbeitet.

Die erhaltenen 360 g schwach gelbgefärbten Harzes hatten einen Feststoffgehalt von 93 Gew.%, eine Viskosität von 720 mPas/75 °C und ein mittleres Molekulargewicht von 255.

Der Gehalt an freiem Phenol betrug 0,13 Gew.%; der Gehalt an Zink 25 ppm.

c) In 700 g der unter a) erhaltenen 51 gew.%igen Harzlösung wurden 86,0 g asymmetrischer Di-n-butylharnstoff eingerührt. Die Lösung wurde vor der Weiterverarbeitung 40 Minuten bei 50 °C gerührt und dann wie beschrieben weiterverarbeitet.

Die erhaltenen 470 g des schwach gelb gefärbten Harzes hatten einen Feststoffgehalt von 86 Gew.%, eine Viskosität von 1120 mPas/75 °C und ein mittleres Molekulargewicht von 231. Der Gehalt an freiem Phenol betrug 0,24 Gew.%; der Gehalt an Zink 20 ppm.

Beispiel 2

1075 g Phenol (11,44 mol) und 1886 g einer wäßrigen 40 gew.%igen Formaldehydlösung (25, 14 mol) wurden mit 148,5 g Zinkacetat [$Zn(CH_3COO)_2 2H_2O$] 3,5 Stunden auf 90 °C erhitzt. Zur auf 30 °C gekühlten Lösung wurden 400 g Methanol zugefügt, und innerhalb einer Stunde wurden 146,3 g einer 40 gew.%igen wäßrigen o-$H_3PO_4$ Lösung zugetropft, wonach filtriert wurde.

Danach wurde die Lösung in einem Dünnschichtverdampfer bei 40 °C und einem Druck von 15 mbar auf einen Feststoffgehalt von ca. 80 Gew.% aufkonzentriert. Die erhaltenen 1540 g des erhaltenen Harzes wiesen einen Gehalt an freiem Formaldehyd von 3,25 Gew.% auf. Das mittlere Molekulargewicht betrug 300.

In das Harz wurden 110 g asymmetrischer Di-n-butylharnstoff und 8 g Di-n-butylamin eingerührt und über einen bei 80 °C und 110 °C beheizten Dünnschichtverdampfer bei einem Druck von 1 mbar weiter aufgearbeitet.

Die erhaltenen 1188 g des schwach gelb gefärbten Harzes hatten einen Feststoffgehalt von 90 Gew.%, eine Viskosität von 3120 mPas/75 °C und ein mittleres Molekulargewicht von 346.

Der Gehalt an freiem Phenol betrug 0,15 Gew.%, der Zinkgehalt 0,13 Gew.%, der im wesentlichen als Zinkphosphat vorlag.

Beispiel 3

800,0 g Epoxid/Hexamethylendiamin-Addukt, hergestellt nach Beispiel B des EP 165 556, 202,0 g Dimerfettsäure (Pripol(R) 1014) (Fa. Unilever AG), 35,0 g Stearinsäure, 17,0 g Triphenylphosphin, 12 g Ethylendiamin, gelöst in 118,0 g Phenylglykol, 54 g Benzylalkohol und 85,0 g Toluol wurden bei 170 °C unter Auskreisen des Wassers umgesetzt, bis eine Säurezahl 3 - 4 mg KOH/g erreicht war. Dann wurde mit 160 g 1-Methoxypropanol-2 und 225 g Ethanol verdünnt und filtriert. Der Feststoffgehalt des Bindemittels betrug 65 Gew.%, die Aminzahl lag bei 73,5 mg KOH/g.

Zur Herstellung von 3000 g eines 10 gew.%igen Elektrotauchbades wurden 323,0 g dieses Bindemittels mit 100,0 g des nach Beispiel 2 hergestellten Phenolharzes gut gemischt, die Mischung mit 9,7 g Essigsäure protoniert, mit vollentsalztem Wasser langsam verdünnt und 2 Tage bei 25 °C gerührt. Der pH-Wert lag bei 7,2, der Leitwert des Bades bei 1300 [$\mu$S]. Die Abscheidungen bei 350 V 2 Minuten auf als Kathode geschalteten mit Zinkphosphat behandelten Stahlblechen (Bonder(R) 132) (Fa. Metallgesellschaft AG) wurden jeweils 20 Minuten bei 130 °C und 140 °C gehärtet. Sie stellten praktisch acetonfeste Beschichtungen mit einer Schichtdicke von 16 $\mu$m dar, die nach 20 Tagen Beanspruchung im Salzsprühtest nach DIN 5002 Korrosionswerte von 0,5 - 1 mm aufwiesen.

## Patentansprüche

**1.** Verfahren zur Herstellung von im wesentlichen phenolfreien, über o,o-Methylenethergruppen verknüpften Phenolharzen durch Methylolierung von Phenol und/oder m-alkylsubstituierten Phenolen, gegebenenfalls im Gemisch mit anderen Alkylphenolen, in wäßrigem Medium in Gegenwart von 0,5 bis 10 Gew.%, bezogen auf eingesetzte Phenole, zweiwertiger Metallkationen, anschließendes Abtrennen der Kationen in

Form schwerlöslicher Salze, gegebenenfalls Reaktion mit ein-, zwei-oder dreiwertigen Alkoholen und/oder methylolierte Amidgruppen aufweisenden Verbindungen, destillatives Entfernen des Wassers, gegebenenfalls mit Hilfe eines Schleppmittels, und Entfernung restlichen Phenols durch Dünnschichtverdampfung, dadurch gekennzeichnet, daß man die Dünnschichtverdampfung in Gegenwart einer säurebindenden Verbindung B vornimmt, die einen $pK_a$-Wert von 4 - 11,5 hat.

2. Verfahren nach Anspruch 1, dadurch gekennzeichnet, daß man die Dünnschichtverdampfung in Gegenwart einer solchen Verbindung B vornimmt, aus der unter den Bedingungen der Dünnschichtverdampfung die säurebindende Verbindung B entsteht.

3. Verfahren nach den Ansprüchen 1 und 2, dadurch gekennzeichnet, daß die säurebindende Verbindung B ein Amin ist.

4. Verfahren nach Anspruch 2, dadurch gekennzeichnet, daß als Verbindung B' ein asymmetrischer Dialkylharnstoff verwendet wird.

## Claims

1. A process for preparing an essentially phenolfree phenolic resin linked via o,o'-methylene ether groups by methylolating phenol or an m-alkyl-substituted phenol alone or mixed with other alkylphenols in an aqueous medium in the presence of 0.5 to 10 % by weight, based on phenol used, of a divalent metal cation, subsequently removing the cation in the form of a sparingly soluble salt, optionally reacting with a monohydric, dihydric or trihydric alcohol or a compound having methylolated amide groups, distillatively removing the water, with or without the aid of an entrainer, and removing residual phenol by thin-film evaporation, which comprises effecting the thin-film evaporation in the presence of an acid-binding compound B which has a $pK_a$ value of 4 - 11.5.

2. A process as claimed in claim 1, wherein the thin-film evaporation is effected in the presence of a compound B' such that the acid-binding compound B is formed therefrom under the conditions of the thin-film evaporation.

3. A process as claimed in claim 1 or 2, wherein the acid-binding compound B is an amine.

4. A process as claimed in claim 2, wherein the compound B' used is an asymmetrical dialkylurea.

## Revendications

1. Procédé de fabrication de résines phénoliques sensiblement exemptes de phénol, réticulées par l'intermédiaire de radicaux éther O,O'-méthylénique , par la méthylolation du phénol et/ou de phénols à substitution m-alkylique, éventuellement en mélange à d'autres alkylphénols, en milieu aqueux et en présence de 0,5 à 10% en poids, par rapport aux phénols mis en oeuvre, de cations de métaux divalents, séparation subséquente des cations sous la forme de sels difficilement solubles, éventuellement réaction avec des alcools monohydroxylés, dihydroxylés ou trihydroxylés et/ou de composés présentant des radicaux amide méthylolés, élimination par distillation de l'eau, éventuellement en recourant à l'aide d'un agent d'entraînement et élimination du phénol résiduel par évaporation en couche mince, caractérisé en ce que l'on entreprend l'évaporation en couche mince en présence d'un composé B fixant les acides, qui possède un $pK_A$ de 4 à 11,5.

2. Procédé suivant la revendication 1, caractérisé en ce que l'on entreprend l'évaporation en couche mince en présence d'un composé B' à partir duquel prend naissance le composé B fixant les acides dans les conditions de l'évaporation en couche mince.

3. Procédé suivant les revendications 1 et 2, caractérisé en ce que le composé B fixant les acides est une amine.

4. Procédé suivant la revendication 2, caractérisé en ce que l'on utilise une dialkylurée asymétrique à titre de composé B'.